# EUROPEAN PATENT APPLICATION

(11) **EP 1 672 016 A1**
(43) Date of publication of application: **21.06.2006**
(21) Application number: 04788276.6
(22) Date of filing: 29.09.2004
(51) Int. Cl.: C08L 13/00, C08K 5/17

(54) **CROSSLINKABEL RUBBER COMPOSITION AND CROSSLINKED OBJECT**

(30) Priority: 30.09.2003 JP 2003339188
(71) Applicant: ZEON CORPORATION, Tokyo 100-8246 (JP)
(72) Inventor: ODAGAWA, Yoshiyuki, Chiyoda-ku, Tokyo 1008246 (JP); IMADA, Akira, Chiyoda-ku, Tokyo 1008246 (JP); EMORI, Nobuyoshi, Chiyoda-ku, Tokyo 1008246 (JP)
(74) Representative: Albrecht, Thomas
(86) International application number: PCT/JP2004/014209
(87) International publication number: WO 2005/030859

(57) **Abstract**

A cross-linkable rubber composition comprised of a mixture of a carboxyl group-containing nitrile copolymer rubber (A) with a carboxyl group content per 100 g of 2x10⁻³ to 1x10⁻¹ equivalents and a carboxyl group-containing acryl-based polymer (B) with a carboxyl group content per 100 g of 4x10⁻⁴ to 1x10⁻¹ equivalents in a weight ratio A:B=40:60 to 90:10 into which a cross-linking agent (C) able to cross-link the carboxyl groups of both the nitrile copolymer rubber (A) and the acryl-based polymer (B) is blended, the amount blended of the cross-linking agent (C), converted to equivalents of functional groups able to react with carboxyl groups in the cross-linking agent, being 0.3 to 3 times equivalents of the total content of both the carboxyl groups of the nitrile copolymer rubber (A) and the acryl-based polymer (B) is used. According to the present invention, a cross-linkable rubber composition giving a cross-linked product superior in not only mechanical property, such as tensile strength and low compression set, and oil resistance, but also high weathering resistance, such as dynamic ozone resistance, and high mechanical property, such as flexural fatigue resistance can be provided.

## Description

### TECHNICAL FIELD

The present invention relates to a cross-linkable rubber composition containing a nitrile copolymer rubber, an acryl-based polymer, and a cross-linking agent and a cross-linked product of the same, more particularly relates to a cross-linkable rubber composition giving a cross-linked rubber superior in oil resistance and weathering resistance and able to be suitably used as rubber parts of automobiles etc. and to a cross-linked product of the same.

### BACKGROUND ART

Acrylonitrile-butadiene rubber (NBR) and other nitrile copolymer rubber are known as rubber superior in oil resistance. However, due to the effects of the unsaturated bonds of the nitrile groups, they have been insufficient in weathering resistance, such as ozone resistance. For this reason, as an improvement over this, a so-called "polyblend" comprised of NBR and a vinyl chloride resin blended in to improve the ozone resistance has been used. However, a polyblend is superior in oil resistance and weathering resistance, but had the problem of environmental pollution due to the halogen when discarded.

To solve this problem, attempts have been made to blend NBR and an acrylate-based polymer, but nothing superior in the balance of the oil resistance, weathering resistance, and mechanical properties has been obtained.

Therefore, a cross-linked rubber obtained not only by simply blending NBR and an acrylate-based polymer, but also introducing into the acrylate-based polymer an unsaturated bond and causing the NBR and the acrylate-based polymer to co-cross-link so as to improve, in addition to the oil resistance and weathering resistance, the mechanical property, such as the tensile strength, low compression set has been proposed (see Patent Document 1). However, this cross-linked rubber, according to studies by the present inventors, was not sufficiently satisfactory in high weathering resistance, such as dynamic ozone resistance, or high mechanical property, such as flexural fatigue resistance.
Patent Document 1 : Japanese Patent Publication (A) No. 2003-26861

### DISCLOSURE OF INVENTION

### PROBLEM TO BE SOLVED BY THE INVENTION

An object of the present invention is to provide a cross-linkable rubber composition giving a cross-linked product superior in not only mechanical property, such as tensile strength and low compression set, and oil resistance, but also high weathering resistance, such as dynamic ozone resistance, and high mechanical property, such as flexural fatigue resistance.

### MEANS FOR SOLVING THE PROBLEM

The inventors engaged in intensive research to achieve the above object and as a result discovered that a cross-linked rubber obtained by blending a nitrile copolymer rubber containing a specific amount of a carboxyl group and an acryl-based polymer containing a specific amount of a carboxyl group in a specific ratio and co-cross-linking the carboxyl groups of the two by a specific amount of a cross-linking agent is superior in not only mechanical strength and oil resistance, but also dynamic ozone resistance and flexural fatigue resistance and thereby completed the present invention.

Therefore, according to the present invention, the following 1 to 7 are provided.
1. A cross-linkable rubber composition comprised of
   a mixture of a carboxyl group-containing nitrile copolymer rubber (A) with a carboxyl group content per 100 g of 2x10⁻³ to 1x10⁻¹ equivalents and a carboxyl group-containing acryl-based polymer (B) with a carboxyl group content per 100 g of 4x10⁻⁴ to 1x10⁻¹ equivalents in a weight ratio A:B=40:60 to 90:10 into which
   a cross-linking agent (C) able to cross-link the carboxyl groups of both the nitrile copolymer rubber (A) and the acryl-based polymer (B) is blended,
   the amount blended of the cross-linking agent (C), converted to equivalents of functional groups able to react with carboxyl groups in the cross-linking agent, being 0.3 to 3 times equivalents of the total content of the carboxyl groups of both the nitrile copolymer rubber (A) and the acryl-based polymer (B).
2. The cross-linkable rubber composition as set forth in the above 1, wherein a ratio of the carboxyl group content of the acryl-based polymer (B) with respect to the carboxyl group content of the nitrile copolymer rubber (A) is 0.2 to 1 times equivalents.
3. The cross-linkable rubber composition as set forth in the above 1 or 2, wherein a total content of the carboxyl groups of both the nitrile copolymer rubber (A) and the acryl-based polymer (B) is 7x10⁻⁴ to 1x10⁻¹ equivalents per 100 g.
4. The cross-linkable rubber composition as set forth in any of the above 1 to 3, wherein the nitrile copolymer rubber (A) includes an α,β-ethylenic unsaturated dicarboxylic acid monoester unit.
5. The cross-linkable rubber composition as set forth in any of the above 1 to 4, wherein the acryl-based polymer (B) includes an α,β-ethylenic unsaturated dicarboxylic acid monoester unit.
6. The cross-linkable rubber composition as set forth in any of the above 1 to 5, wherein the cross-linking agent (C) is a polyvalent amine compound.
7. A cross-linked product made by cross-linking the cross-linkable rubber composition as set forth in any of the above 1 to 6.

### EFFECTS OF THE INVENTION

According to the present invention, there is provided a cross-linkable rubber composition giving a cross-linked product superior in not only mechanical property, such as tensile strength and low compression set, and oil resistance, but also high weathering resistance, such as dynamic ozone resistance, and high mechanical property, such as flexural fatigue resistance.

### BEST MODE FOR WORKING THE INVENTION

The cross-linkable rubber composition of the present invention is characterized by being comprised of a mixture of a carboxyl group-containing nitrile copolymer rubber (A) with a carboxyl group content per 100 g of 2x10⁻³ to 1x10⁻¹ equivalents and a carboxyl group-containing acryl-based polymer (B) with a carboxyl group content per 100 g of 4x10⁻⁴ to 1x10⁻¹ equivalents in a weight ratio A:B=40:60 to 90:10 into which a cross-linking agent (C) able to cross-link the carboxyl groups of both the nitrile copolymer rubber (A) and the acryl-based polymer (B) is blended, the amount blended of the cross-linking agent (C), converted to equivalents of functional groups able to react with carboxyl groups in the cross-linking agent, being 0.3 to 3 times equivalents of the total content of the carboxyl groups of both the nitrile copolymer rubber (A) and the acryl-based polymer (B).
Below, the carboxyl group-containing nitrile copolymer rubber (A), carboxyl group-containing acryl-based polymer (B), and cross-linking agent (C) forming the cross-linkable rubber composition of the present invention will be explained.

### Carboxyl Group-Containing Nitrile Copolymer Rubber (A)

The carboxyl group-containing nitrile copolymer rubber (A) used in the present invention (hereinafter referred to as the "nitrile copolymer rubber (A)" in some cases) is a polymer obtained by copolymerization of an α,β-ethylenic unsaturated nitrile, conjugated diene, carboxyl group-containing monomer, and other copolymerizable monomers added in accordance with need.

The ratio of the α,β-ethylenic unsaturated nitrile unit in the nitrile copolymer rubber (A) is preferably 10 to 70 wt%, more preferably 15 to 60 wt%, particularly preferably 20 to 45 wt%.
The ratio of the carboxyl group-containing monomer unit is in a range where the amount of the carboxyl groups in the nitrile copolymer rubber (A) due to the introduction of the carboxyl group-containing monomer unit is 2x10⁻³ to 1x10⁻¹ equivalents per 100 g of the rubber, preferably 4x10⁻³ to 5x10⁻² equivalents, more preferably 6x10⁻³ to 3x10⁻² equivalents.
The ratio of the other copolymerizable monomers copolymerized with these monomers in accordance with need is in a range of 0 to 30 wt%.

If the α,β-ethylenic unsaturated nitrile unit is too small in content, the cross-linked product is liable to deteriorate in oil resistance, while conversely if too great, the cold resistance may drop. Further, if the carboxyl group content is too small, sufficient cross-linking becomes difficult and the cross-linked product is liable to drop in mechanical strength, while conversely if too great, scorching becomes faster or the elongation may fall. The monomers of the above group may be used as single types or as two types or more combined.

As the α,β-ethylenic unsaturated nitrile, a C3 to C18 α,β-ethylenic unsaturated compound containing a nitrile group may be used. As examples of this compound, acrylonitrile, methacrylonitrile, α-chloroacrylonitrile, etc. may be mentioned. Among these, acrylonitrile is preferable.

As a conjugated diene, a C4 to C12 aliphatic conjugated diene compound can be used. As examples of this compound, 1,3-butadiene, halogen-substituted 1,3-butadiene, 1,3-pentadiene, isoprene, 2,3-dimethyl-1,3-butadiene, 1,3-pentadiene, etc. may be mentioned. Among these, 1,3-butadiene is preferable.

The carboxyl group-containing monomer is not limited so long as it is copolymerizable with the above α,β-ethylenic unsaturated nitrile and conjugated diene, but α,β-ethylenic unsaturated monocarboxylic acid, α,β-ethylenic unsaturated dicarboxylic acid, and α,β-ethylenic unsaturated dicarboxylic acid monoester may be preferably mentioned.

As the α,β-ethylenic unsaturated monocarboxylic acid, a C3 to C12 α,β-ethylenic unsaturated compound having one carboxyl group may be mentioned. Acrylic acid, methacrylic acid, ethyl acrylic acid, crotonic acid, cinnamic acid, etc. may be illustrated.

As the α,β-ethylenic unsaturated dicarboxylic acid, a C4 to C12 α,β-ethylenic unsaturated compound having two carboxyl groups may be mentioned. Fumaric acid, maleic acid, and other butendioic acids; itaconic acid, citraconic acid, chloromaleic acid, etc. may be illustrated. Further, anhydrides of these α,β-ethylenic unsaturated dicarboxylic acids may also be mentioned.

As the α,β-ethylenic unsaturated dicarboxylic acid monoester, a monoester of a C3 to C11 α,β-ethylenic unsaturated dicarboxylic acid and a C1 to C8 alkanol may be mentioned. A butendioic acid mono chain alkylester, a butendioic acid monoester having an alicyclic structure, an itaconic acid monoester, citraconic acid monoester, etc. may be illustrated.
As the butendioic acid mono chain alkylester, monomethyl fumarate, monoethyl fumarate, mono n-butyl fumarate, monomethyl maleate, monoethyl maleate, mono n-butyl maleate, etc. may be mentioned.
As the butendioic acid monoester having an alicyclic structure, monocyclopentyl fumarate, monocyclohexyl fumarate, monocyclohexenyl fumarate, monocyclopentyl maleate, monocyclohexyl maleate, monocyclohexenyl maleate etc. may be mentioned.
As the itaconic acid monoester, monomethyl itaconate, monoethyl itaconate, mono n-butyl itaconate, etc. may be mentioned.
As a citraconic acid monoester, mono-2-hydroxyethyl citraconate etc. may be mentioned.

Among the above-mentioned carboxyl group-containing monomers, α,β-ethylenic unsaturated dicarboxylic acid monoesters are preferable. Among the α,β-ethylenic unsaturated dicarboxylic acid monoesters, butendioic acid mono chain alkylesters and butendioic acid monoesters having an alicyclic structure are more preferable. Among the butendioic acid mono chain alkylesters, mono n-butyl fumarate, mono n-butyl maleate, and mono n-butyl itaconate are particularly preferred. Among the butendioic acid monoesters having an alicyclic structure, monocyclohexyl fumarate and monocyclohexyl maleate are particularly preferable.

Note that carboxyl group-containing monomers include these monomers with carboxyl groups forming carboxylic acid salt.

As the other copolymerizable monomers able to be added in accordance with need, a nonconjugated diene, α-olefin, aromatic vinyl, α,β-ethylenic unsaturated monocarboxylic acid ester, fluoroolefin, copolymerizable antioxidant, etc. may be mentioned.

As the nonconjugated diene, a C5 to C12 nonconjugated diene may be mentioned. 1,4-pentadiene, 1,4-hexadiene, vinylnorbornene, dicyclopentadiene, etc. may be illustrated.

As the α-olefin, a C2 to C12 chain monoolefin having a double bond between the terminal carbon and its adjacent carbon may be mentioned. Ethylene, propylene, 1-butene, 4-methyl-1-pentene, 1-hexene, 1-octene, etc. may be illustrated.

As the aromatic vinyl, styrene and a C8 to C18 styrene derivative may be mentioned. As examples of the derivative, α-methylstyrene, 2-methylstyrene, 4-methylstyrene, 2,4-diethylstyrene, 4-butoxystyrene, N,N-dimethylaminostyrene, etc. may be illustrated.

As the α,β-ethylenic unsaturated monocarboxylic acid ester, an ester of an α,β-ethylenic unsaturated monocarboxylic acid and a C1 to C12 aliphatic alkanol may be mentioned. This may have substituent groups. As examples of this compound, methyl (meth)acrylate [meaning methyl acrylate or/and methyl methacrylate, same below for butyl (meth)acrylate etc.], butyl (meth)acrylate, methoxyethyl (meth)acrylate, trifluoroethyl (meth)acrylate, 2-hydroxypropyl (meth)acrylate, tetrafluoropropyl (meth)acrylate, and other (meth)acrylic acid esters may be mentioned.

As the fluoroolefin, a C2 to C12 unsaturated fluorinated compound may be mentioned. Difluoroethylene, tetrafluoroethylene, fluoroethylvinyl ether, fluoropropylvinyl ether, vinyl pentafluorobenzoate, etc. may be illustrated.

As the copolymerizable antioxidant, N-(4-anilinophenyl)acrylamide, N-(4-anilinophenyl) methacrylamide, N-(4-anilinophenyl)cinnamamide, N-(4-anilinophenyl)crotonamide, N-phenyl-4-(3-vinylbenzyloxy) aniline, N-phenyl-4-(4-vinylbenzyloxy) aniline etc. may be illustrated.

To copolymerize these α,β-ethylenic unsaturated nitrile, conjugated diene, carboxyl group-containing monomer, and other copolymerizable monomer added in accordance with need so as to obtain the carboxyl group-containing nitrile copolymer rubber (A), the known emulsion polymerization or solution polymerization may be used.

The carboxyl group-containing nitrile copolymer rubber (A) has a Mooney viscosity ML₁₊₄ (100°C) of preferably 10 to 150, more preferably 20 to 120, particularly preferably 30 to 100. If the Mooney viscosity is too small, the cross-linked product is liable to drop in mechanical strength, while conversely if too large, the shapeability may deteriorate.

### Carboxyl Group-Containing Acryl-Based Polymer (B)

The carboxyl group-containing acryl-based polymer (B) used in the present invention (hereinafter referred to as the "acryl-based polymer (B)" in some cases) is a polymer obtained by copolymerization of a (meth)acrylic acid ester, a carboxyl group-containing monomer, and other copolymerizable monomer added in accordance with need. The ratios of these monomer units in said copolymer are not particularly limited so long as they are in ranges where the cross-linkable rubber composition of the present invention exhibits the effects of the present invention.

As the (meth)acrylic acid ester, a (meth)acrylic acid alkylester, (meth)acrylic acid alkoxyalkylester, etc. may be mentioned.

As a (meth)acrylic acid alkylester, an ester of a C1 to C8 alkanol and (meth)acrylic acid is preferable. Specifically, methyl (meth)acrylate, ethyl (meth)acrylate, n-propyl (meth)acrylate, n-butyl (meth)acrylate, isopropyl (meth)acrylate, isobutyl (meth)acrylate, n-hexyl (meth)acrylate, 2-ethylhexyl (meth)acrylate, cyclohexyl (meth)acrylate, etc. may be mentioned. Among these, ethyl (meth)acrylate and n-butyl (meth)acrylate are preferable.

As the (meth)acrylic acid alkoxyalkylester, an ester of a C2 to C8 alkoxyalkanol and (meth)acrylic acid is preferable. Specifically, methoxymethyl (meth)acrylate, ethoxymethyl (meth)acrylate, 2-ethoxyethyl (meth)acrylate, 2-butoxyethyl (meth)acrylate, 2-methoxyethyl (meth)acrylate, 2-propoxyethyl (meth)acrylate, 3-methoxypropyl (meth)acrylate, 4-methoxybutyl (meth)acrylate, etc. may be mentioned. Among these, 2-ethoxyethyl (meth)acrylate and 2-methoxyethyl (meth)acrylate, in particular 2-ethoxyethyl acrylate and 2-methoxyethyl acrylate, are preferable.

As the carboxyl group-containing monomer forming the carboxyl group-containing acryl-based polymer (B), a carboxyl group-containing monomer similar to the above nitrile copolymer rubber (A) can be used.

In the carboxyl group-containing acryl-based polymer (B) as well, in the same way as the above nitrile copolymer rubber (A), as the carboxyl group-containing monomer, an α,β-ethylenic unsaturated dicarboxylic acid monoester is preferable. Among the α,β-ethylenic unsaturated dicarboxylic acid monoesters, a butendioic acid mono chain alkylester and a butendioic acid monoester having an alicyclic structure are more preferable. Among the butendioic acid mono chain alkylesters, mono n-butyl fumarate, mono n-butyl maleate, and mono n-butyl itaconate are particularly preferred, while among the butendioic acid monoesters having an alicyclic structure, mono cyclohexyl fumarate and mono cyclohexyl maleate are particularly preferable.

The amount of the carboxyl groups in the acryl-based polymer (B) resulting from introduction of carboxyl group-containing monomer unit is 4x10⁻⁴ to 1x10⁻¹ equivalents per 100 g of the copolymer, preferably 1x10⁻³ to 4x10⁻² equivalents, more preferably 5x10⁻³ to 2x10⁻² equivalents.

Further, the ratio of the carboxyl group content per 100 g of the acryl-based polymer (B) with respect to the carboxyl group content per 100 g of the nitrile copolymer rubber (A) is preferably 0.2 to 1 times equivalents, more preferably 0.3 to 1 times equivalents, particularly preferably 0.5 to 1 times equivalents. If this ratio is too small or too large, said carboxyl group-containing nitrile copolymer rubber (A) and carboxyl group-containing acryl-based polymer (B) will not sufficiently co-cross-link and the cross-linked product is liable to be insufficient in mechanical strength.

As the other copolymerizable monomer added in accordance with need in the monomers forming the carboxyl group-containing acryl-based polymer (B), it is possible to use monomers similar to those of the carboxyl group-containing nitrile copolymer rubber (A). However, in the carboxyl group-containing acryl-based polymer (B), among the group of monomers illustrated in the carboxyl group-containing nitrile copolymer rubber (A), the (meth)acrylic acid esters in the α,β-ethylenic unsaturated monocarboxylic acid esters are eliminated and α,β-ethylenic unsaturated nitrile is added. Note that as the α,β-ethylenic unsaturated nitrile, it is possible to use monomers the same as those mentioned as monomers forming the above nitrile copolymer rubber (A).

These (meth)acrylic acid ester, carboxyl group-containing monomer, and other copolymerizable monomer added in accordance with need are copolymerized to obtain the carboxyl group-containing acryl-based polymer (B) by known emulsion polymerization.

The Mooney viscosity ML₁₊₄ (100°C) of the acryl-based polymer (B) is preferably 10 to 150, more preferably 20 to 80, particularly preferably 30 to 70. If the Mooney viscosity is too small, the shapeability and the mechanical strength of the cross-linked product are liable to become degraded, while if too large, the shapeability may be degraded.

In the cross-linkable rubber composition of the present invention, the carboxyl group-containing nitrile copolymer rubber (A) and the carboxyl group-containing acryl-based polymer (B) are used mixed in a weight ratio (A:B) of 40:60 to 90:10, preferably 50:50 to 80:20, more preferably 55:45 to 75:25. If the ratio of mixture of the carboxyl group-containing acryl-based polymer (B) is too small, the cross-linked product is liable to drop in weathering resistance, while conversely if too great, the oil resistance and mechanical strength may become inferior.

Further, the total content of the carboxyl groups of both the nitrile copolymer rubber (A) and acryl-based polymer (B) is preferably 7x10⁻⁴ to 1x10⁻¹ equivalents per 100 g, more preferably 1x10⁻³ to 5x10⁻² equivalents. If the total content of the carboxyl groups is too small, the tensile strength, compression set, and other mechanical strength and the oil resistance are liable to fall, while if too great, the tensile strength may greatly fall and the dynamic ozone resistance and flexural fatigue resistance may become inferior.

### Cross-linking Agent (C)

The cross-linking agent (C) contained in the cross-linkable rubber composition of the present invention is not particularly limited so long as it can cross-link the carboxyl groups of both the carboxyl group-containing nitrile copolymer rubber (A) and carboxyl group-containing acryl-based polymer (B).
As the cross-linking agent, a polyvalent amine compound, polyvalent hydrazide compound, polyvalent epoxy compound, polyvalent isocyanate compound, aziridine compound, basic metal oxide, organometallic halide, etc. may be mentioned. Further, these cross-linking agents and cross-linking agents generally used as cross-linking agents of NBR such as peroxide may also be used together.

As the polyvalent amine compound, a C4 to C30 polyvalent amine compound is preferable. As an example of a polyvalent amine compound, an aliphatic polyvalent amine compound, aromatic polyvalent amine compound, etc. may be mentioned. However, a guanidine compound or other compound having a nonconjugated nitrogen-carbon double bond is not included.
As the aliphatic polyvalent amine compound, hexamethylene diamine, hexamethylene diaminecarbamate, N,N'-dicinnamilidene-1,6-hexane diamine etc. may be mentioned.
As the aromatic polyvalent amine compound, 4,4'-methylene dianiline, m-phenylene diamine, 4,4'-diaminodiphenyl ether, 3,4'-diaminodiphenyl ether, 4,4'-(m-phenylene diisopropylidene)dianiline, 4,4'-(p-phenylene diisopropylidene)dianiline, 2,2'-bis [4-(4-aminophenoxy)phenyl]propane, 4,4'-diaminobenzanilide, 4,4'-bis(4-aminophenoxy)biphenyl, m-xylylene diamine, p-xylylene diamine, 1,3,5-benzene triamine, etc. may be mentioned. These may be used alone or in combinations of two or more types.

A polyvalent hydrazide compound is a compound having at least two hydrazide groups.
As the polyvalent hydrazide compound, for example, dihydrazide isophthalate, dihydrazide terephthalate, dihydrazide phthalate, dihydrazide 2,6-naphthalene dicarboxylate, dihydrazide naphthalate, dihydrazide oxalate, dihydrazide malate, dihydrazide succinate, dihydrazide glutarate, dihydrazide adipate, dihydrazide pimelate, dihydrazide suberate, dihydrazide azealate, dihydrazide sebacate, dihydrazide brassylate, dihydrazide dodecane diacid, dihydrazide acetone dicarboxylate, dihydrazide fumarate, dihydrazide maleate, dihydrazide itaconate, dihydrazide trimellitate, dihydrazide 1,3,5-benzene tricarboxylate, dihydrazide aconitate, dihydrazide pyromellitate, etc. may be mentioned. These may be used alone or in combinations of two or more types.

As the polyvalent epoxy compound, for example, a phenol novolac type epoxy compound, cresol novolac type epoxy compound, cresol type epoxy compound, bisphenol A type epoxy compound, bisphenol F type epoxy compound, brominated bisphenol A type epoxy compound, brominated bisphenol F type epoxy compound, hydrogenated bisphenol A type epoxy compound, and other glycidyl ether type epoxy compounds; an alicyclic epoxy compound, glycidyl ester type epoxy compound, glycidyl amine type epoxy compound, isocyanurate type epoxy compound, and other polyvalent epoxy compounds; and other compounds having two or more epoxy groups in a molecule may be mentioned. These may be used alone or in combinations of two or more types.

As the polyvalent isocyanate compound, C6 to C24 diisocyanates and triisocyanates are preferable.
As specific examples of diisocyanates, 2,4-tolylene diisocyanate (2,4-TDI), 2,6-tolylene diisocyanate (2,6-TDI), 4,4'-diphenylmethane diisocyanate (MDI), hexamethylene diisocyanate, p-phenylene diisocyanate, m-phenylene diisocyanate, 1,5-naphthylene diisocyanate, etc. may be mentioned.
Further, as specific examples of triisocyanates, 1,3,6-hexamethylene triisocyanate, 1,6,11-undecane triisocyanate, bicycloheptane triisocyanate, etc. may be mentioned. These may be used alone or in combinations of two or more types.

As the aziridine compound, tris-2, 4, 6- (1-aziridinyl) - 1,3,5-triazine, tris[1-(2-methyl)aziridinyl]phosphinoxide, hexa[1-(2-methyl)aziridinyl]triphosphatriazine, etc. may be mentioned. These may be used alone or in combinations of two or more types.

As the basic metal oxide, zinc oxide, lead oxide, calcium oxide, magnesium oxide, etc. may be mentioned. These may be used alone or in combinations of two or more types.

As the organometallic halide, a dicyclopentadienyl metal dihalide may be mentioned. As metals contained in the organometallic halide, titanium, zirconium, hafnium, etc. may be mentioned.

Among these cross-linking agents (C) able to cross-link the carboxyl groups of both the nitrile copolymer rubber (A) and acryl-based polymer (B), polyvalent amine compounds and polyvalent dihydrazide compounds are preferable. Among the polyvalent amine compounds, hexamethylene diaminecarbamate and 2,2'-bis [4-(4-aminophenoxy)phenyl]propane are particularly preferable, while among the polyvalent dihydrazide compounds, dihydrazide adipate is particularly preferable.

The amount blended of the cross-linking agent (C) of the cross-linkable rubber composition of the present invention is, converted to equivalents of functional groups able to react with carboxyl groups in said cross-linking agent, 0.3 to 3 times equivalents of the total content of the carboxyl groups of both said nitrile copolymer rubber (A) and said acryl-based polymer (B), preferably 0.5 to 2.5 times equivalents, more preferably 0.6 to 1.5 times equivalents. If the amount blended of the cross-linking agent (C) is too small, the cross-linking is not sufficient and a drop in the mechanical strength and an increase in the compression set are liable to occur, while conversely if too great, the elongation and the mechanical strength may fall.

### Additives

The cross-linkable rubber composition of the present invention may also contain, in accordance with need, a cross-linking accelerator, cross-linking retardant, antioxidant, cross-linking aid, filler, reinforcing agent, plasticizer, lubricant, adhesive, lubricating agent, flame retardant, anti-mold agent, antistatic agent, coloring agent, or other additive.

The cross-linking accelerator is not particularly limited, but a guanidine compound, imidazole compound, quaternary onium salt, polyvalent tertiary amine compound, tertiary phosphine compound, alkali metal salt of a weak acid, etc. are preferable.
As the guanidine compound, 1,3-diphenylguanidine, 1,3-di-o-tolylguanidine, etc. may be mentioned. As the imidazole compound, 2-methylimidazole, 2-phenylimidazole, etc. may be mentioned. As the quaternary onium salt, tetra n-butyl ammonium bromide, octadecyl tri n-butyl ammonium bromide, etc. may be mentioned. As the polyvalent tertiary amine compound, triethylene diamine, 1,8-diazabicyclc[5.4.0]undecene-7, etc. may be mentioned. As the tertiary phosphine compound, triphenyl phosphine, trip-tolyl phosphine, etc. may be mentioned. As the alkali metal salt of a weak acid, a sodium or potassium salt of phosphoric acid, carbonic acid, or other inorganic weak acid and a sodium or potassium salt of stearic acid, lauric acid, or other organic weak acid may be mentioned.

As the cross-linking retarder, a mono primary amine compound may be mentioned. A mono primary amine compound is a compound comprised of ammonia with one of the hydrogen atoms substituted by a hydrocarbon group. An aliphatic mono primary amine, alicyclic mono primary amine, aromatic mono primary amine, amino alcohol, amino-oxo compound, etc. may be mentioned. Among these, an aliphatic mono primary amine is preferable. In particular, a C8 to C20 aliphatic mono primary amine is more preferable.
As the aliphatic mono primary amine, methylamine, ethylamine, propylamine, allylamine, isopropylamine, n-butylamine, t-butylamine, sec-butylamine, hexylamine, heptylamine, octylamine, nonylamine, decylamine, undecylamine, dodecylamine, tridecylamine, tetradecylamine, pentadecylamine, cetylamine, 2-ethylhexylamine, octadecylamine, cis-9-octadecenylamine, nonadecylamine, etc. may be mentioned. Among these, octylamine, decylamine, dodecylamine, tetradecylamine, cetylamine, octadecylamine, cis-9-octadecenylamine, nonadecylamine, and other C8 to C20 aliphatic mono primary amines are preferable.
As the alicyclic mono primary amine, cyclopropylamine, cyclobutylamine, cyclopentylamine, cyclohexylamine, etc. may be mentioned.
As the aromatic mono primary amine, aniline, o-toluidine, m-toluidine, benzylamine, α-naphthylamine, β-naphthylamine, etc. may be mentioned.
As the amino alcohol, aminoethanol, aminopropanol, D,L-alaninol, 2-aminobutyl alcohol, 2-amino-2-methylpropanol, 2-amino-2-hydroxymethyl-1,3-propanediol, 2-amino-2-methylpropane-1,3-diol, 2-amino-2-ethyl-1,3-propanediol, 1-chloro-3-aminopropan-2-ol, 3-amino-1,2-propanediol, 2-amine-1,3-propanediol, and other amino alcohols, etc. may be mentioned.
As the aminooxo compound, 3-methoxypropylamine, 3-ethoxypropylamine, etc. may be mentioned.

As the antioxidant, a phenol-based, amine-based, phosphoric acid-based, or other antioxidant may be used. As typical examples of phenol-based ones, 2,2'-methylenebis(4-methyl-6-t-butylphenol) etc. may be mentioned, while as typical examples of amine-based ones, 4,4'-bis(α,α-dimethylbenzyl)diphenylamine etc. may be mentioned.

As the filler, carbon black, silica, calcium carbonate, magnesium carbonate, talc, clay, etc. may be used. These may have silane coupling agents etc. mixed into them.

### Method of Preparation of Cross-Linkable Rubber Composition and Cross-Linked Product

The method of preparation of the cross-linkable rubber composition of the present invention is not particularly limited. The composition may be prepared by a method of preparation of a general rubber composition. For example, an internal mixer or open roll may be used to knead the nitrile copolymer rubber (A), acryl-based polymer (B), and cross-linking agent (C) and in accordance with need any additive. When blending a cross-linking agent (C), cross-linking accelerator, cross-linking aid, etc., after blending them, the temperature is preferably adjusted to not more than the cross-linking start temperature for the mixing.

The method of cross-linking the cross-linkable rubber composition of the present invention to obtain a cross-linked product is not particularly limited. For example, the temperature at the time of cross-linking may be set to preferably 100 to 200°C, more preferably 130 to 190°C, to obtain a cross-linked product (primary cross-linked product). Further, the obtained cross-linked product may if necessary further be treated by the above temperature by an oven, hot air, steam, etc. for 1 to 5 hours to cause secondary cross-linking.

The thus obtained cross-linked product of the present invention is superior in not only mechanical property, such as tensile strength and low compression set, and oil resistance, but also high weathering resistance, such as dynamic ozone resistance, and high mechanical property, such as flexural fatigue resistance. The cross-linked product of the present invention utilizes these properties and is useful in a broad range of fields of for example automobiles and other transport machinery, general machinery, electrical machinery, etc. as O-rings, gaskets, oil seals, bearing seals, and other seal materials; oil tubes, fuel hoses, and other hoses; transmission belts, endless belts, and other industrial belts; bumpers, vibration absorbers; conductor coverings; sheets; etc.

### EXAMPLES

Below, examples will be given so that the present invention will be more specifically explained. In the following, "parts" and "%" are based on weight unless otherwise indicated. Further, the characteristics were tested and evaluated as below.

### (1) Tensile Strength

Of the ordinary state physical properties of rubber cross-linked products, the tensile strength, elongation, and 100% tensile stress were measured by preparing a sheet-shaped cross-linked product, then punching out a dumbbell no. 3 shape test piece and using this for measurement based on JIS K6251 at a tensile rate of 500 mm/min.

### (2) Compression Set

A sample of the cross-linked rubber was measured for compression set in accordance with JIS K6262. The test conditions were compression rate of 25%, 100°C, and 22 hours.

### (3) Oil Resistance

In accordance with JIS K6258, a test use cross-linked sheet was immersed in a test oil (IRM903) adjusted to 100°C. The degree of swelling of volume △V (unit: %) after the elapse of 70 hours was found. The smaller the ΔV, the better the oil resistance.

### (4) Dynamic Ozone Resistance

A test piece described in Section 4.4 of JIS K6259 was held stretched 20% in an environment of 40°C and an ozone concentration of 50 pphm. The existence of any cracks was evaluated at 24 hours and 72 hours after the start of holding.

### (5) Flexural Fatigue Resistance

The flexural fatigue resistance was evaluated using a test piece described in Section 5.3 of JIS K6260 and repeatedly flexing it in accordance with Section 5.4. The number of flexing operations until the test piece broke was used for the evaluation.

### Reference Example 1 (Example of Production of Nitrile Copolymer Rubber "a")

A reactor equipped with a thermometer and a stirring device was prepared with ion exchanged water in an amount of 200 parts, sodium dodecylbenzene sulfonate in 0.25 part, acrylonitrile in 36 parts, mono n-butyl fumarate in 3 parts, and the t-dodecylmercaptan of molecular weight adjuster in 0.5 part in that order, evacuated by reducing the pressure and replaced with nitrogen repeatedly for a total of three times to sufficiently remove the oxygen, then prepared with butadiene in an amount of 61 parts. The reactor was held at 5°C and charged with cumene hydroperoxide (polymerization initiator) in an amount of 0.1 part and ferrous sulfate in an amount of 0.01 part. The mixture was stirred for 16 hours for emulsion polymerization.

At a polymerization conversion rate of 85%, a polymerization stopper constituted by a 10% aqueous solution of hydroquinone in an amount of 0.1 part was added to stop the polymerization reaction, then a rotary evaporator was used to remove the residual monomers at a water temperature of 60°C and thereby obtain an emulsion of an acrylonitrile-butadiene-mono n-butyl fumarate copolymer (solid content concentration of about 30 wt%). The obtained emulsion was poured into an aqueous solution of calcium chloride to obtain an aqueous dispersion of polymer crumbs, this aqueous dispersion was filtered by a metal mesh, then the result was mixed with water and filtered again. This washing operation was performed a total of two times, then the result was dried to obtain a nitrile copolymer rubber "a".

The nitrile copolymer rubber "a" was comprised of an acrylonitrile unit in an amount of 35%, a butadiene unit in 62.4%, and a mono n-butyl fumarate unit in 2.6%. The carboxyl group content per 100 g of the rubber was 0.015 equivalents, while the Mooney viscosity ML₁₊₄ (100°C) was 60.

### Reference Examples 2 to 4 (Examples of Production of Nitrile Copolymer Rubber "b" to "d")

The same procedure was followed as in Reference Example 1 except for using the ingredients and parts by weight shown in Table 1 for the polymerization so as to obtain each of the nitrile copolymer rubber "b" to "d".

The compositions, carboxyl group content per 100 g of rubber, and Mooney viscosity ML₁₊₄ (100°C) of each of the nitrile copolymer rubber "b" to "d" are shown in Table 1.

**Table 1**

| | | | **Ref. Ex. 1** | **Ref. Ex. 2** | **Ref. Ex. 3** | **Ref. Ex. 4** |
|---|---|---|---|---|---|---|
| **Monomer prepared** | **Acrylonitrile** | **(parts)** | **36** | **36** | **36** | **36** |
| | **Butadiene** | **(parts)** | **61** | **63** | **63.8** | **44** |
| | **Mono n-butyl fumarate** | **(parts)** | **3** | **1** | **0.2** | **20** |
| **Generated polymer** | **Nitrile copolymer rubber** | | **a** | **b** | **c** | **d** |
| | **Acrylonitrile unit** | **(%)** | **35** | **35.2** | **35.3** | **35.4** |
| | **Butadiene unit** | **(%)** | **62.4** | **63.8** | **64.5** | **44.8** |
| | **Mono n-butyl fumarate unit** | **(%)** | **2.6** | **1** | **0.18** | **19.8** |
| | **Carboxyl group content (eq./100g)** | | **0.015** | **0.006** | **0.001** | **0.11** |
| | **Mooney viscosity ML**_{**1+4**} **(100°C)** | | **60** | **62** | **64** | **48** |

### Reference Example 5 (Example of Production of Acryl-Based Polymer "p")

A reactor equipped with a thermometer and a stirring device was prepared with ion exchanged water in an amount of 150 parts, sodium octyl sulfate in 2 parts, ammonium persulfate (polymerization initiator) in 0.3 part, ethyl acrylate in 93 parts, acrylonitrile in 5 parts, mono n-butyl fumarate in 2 parts, and t-dodecylmercaptan (molecular weight adjuster) in 0.01 part. This was stirred at a temperature of 80°C for 12 hours for emulsion polymerization, then the reaction was stopped to obtain an emulsion. The solid content concentration of the emulsion was 39% and the polymerization conversion rate was 98%. This emulsion was mixed with an aqueous solution of calcium chloride for solidification to obtain an aqueous dispersion of an acryl-based polymer. This aqueous dispersion was filtered by a metal mesh and further mixed with water and again filtered. This washing operation was performed a total of two times, then the result was dried to obtain a rubber of the acryl-based polymer "p".

The acryl-based polymer "p" was comprised of an ethyl acrylate unit in an amount of 93.2%, an acrylonitrile unit in 5%, and a mono n-butyl fumarate unit in 1.8%. The carboxyl group content per 100 g of the polymer was 0.01 equivalent, while the Mooney viscosity ML₁₊₄ (100°C) was 50.

### Reference Example 6 to 10 (Example of Production of Acryl-based Polymers "q" to "u")

The same procedure was followed as in Reference Example 5 except for using the ingredients and parts by weight shown in Table 2 for the polymerization so as to obtain the acryl-based polymers "q" to "u".

The compositions, carboxyl group content per 100 g of

| | | | Ref. Ex.5 | Ref. Ex. 6 | Ref. Ex. 7 | Ref. Ex. 8 | Ref. Ex. 9 | Ref. Ex. 10 |
|---|---|---|---|---|---|---|---|---|
| Monomer prepared | Ethyl acrylate | (parts) | 93 | 94 | 94.5 | 94.7 | 93 | 87 |
| | Mono n-butyl fumarate | (parts) | 2 | 1 | 0.5 | 0.3 | - | - |
| | Cyclohexyl fumarate | (parts) | - | - | - | - | 2 | - |
| | Ethylidene norbornene | (parts) | - | - | - | - | - | 3 |
| | Acrylonitrile | (parts) | 5 | 5 | 5 | 5 | 5 | 10 |
| Generated polymer | Acryl-based polymer | | p | q | r | s | t | u |
| | Ethyl acrylate unit | (%) | 93.2 | 94.1 | 94.6 | 94.9 | 93 | 87 |
| | Mono n-butyl fumarate unit | (%) | 1.8 | 0.9 | 0.36 | 0.13 | - | - |
| | Cyclohexyl fumarate unit | (%) | - | - | - | - | 2 | - |
| | Ethylidene norbornene unit | (%) | - | - | - | - | - | 3 |
| | Acrylonitrile unit | (%) | 5 | 5 | 5 | 5 | 5 | 10 |
| | Carboxyl group content (eq./100g) | | 0.01 | 0.005 | 0.002 | 0.0007 | 0.01 | 0 |
| | Mooney viscosity ML₁₊₄ (100°C) | | 35 | 43 | 38 | 45 | 43 | 45 |

### Example 1

The nitrile copolymer rubber "a" in an amount of 60 parts, the acryl-based polymer "p" in 40 parts, carbon black (Seast 116, made by Tokai Carbon) in 50 parts, stearic acid (made by Asahi Denka, lubricant/cross-linking aid) in 2 parts, dibutyldiglycol adipate (made by Asahi Denka, plasticizer) in 5 parts, and 4,4'-bis(α,α-dimethylbenzyl)diphenylamine (Nocrac CD, made by Ouchi Shinko Chemical Industrial, antioxidant) in 1 part were charged into a Bambury mixer and kneaded at 50°C. After this, this mixture was given hexamethylene diaminecarbamate (Diak#1, made by Dupont-Dow Elastomer, cross-linking agent) in 1.04 part and di-o-tolylguanidine (Noccelar DT, made by Ouchi Shinko Chemical Industrial, cross-linking accelerator) in 4 parts and was kneaded by an open roll at 50°C to prepare a cross-linkable rubber composition. This composition was press formed by a press machine at 160°C and 1 MPa for 30 minutes to obtain a primary cross-linked product of a length of 15 cm, a width of 15 cm, and a thickness of 2 mm. The primary cross-linked product was taken out and left in a 150°C oven for 2 hours for secondary cross-linking so as to obtain a cross-linked product.

The cross-linked product was tested for tensile strength, compression set, oil resistance, dynamic ozone resistance, and flexural fatigue resistance. The results are shown in Table 3.

### Examples 2 to 5, Comparative Examples 1 to 4

The same procedure was followed as in Example 1 except for using the ingredients and parts by weight described in Table 3 so as to obtain cross-linked products.
Provided, however, that in Comparative Example 4, when obtaining the cross-linked product, the 2 parts of stearic acid were changed to 1 part, the cross-linking agent was changed from the 4 parts of hexamethylene diaminecarbamate to 0.5 part of sulfur, and the cross-linking accelerator was changed from the 4 parts of di-o-tolylguanidine to 2 parts of tetrakis(2-ethylhexyl)thiuram disulfide (Noccelar TOT-N, made by Ouchi Shinko Chemical Industrial), 0.2 part of 2-mercaptobenzothiazole (Noccelar M, made by Ouchi Shinko Chemical Industrial), and 1 part of N-cyclohexyl-2-benzothiazolylsulfenamide (Noccelar CZ, made by Ouchi Shinko Chemical Industrial). Further, before kneading on the open roll, zinc oxide (Hydrozincite No. 1, cross-linking aid) was added in an amount of 5 parts.
The cross-linked products were evaluated and tested in the same way as in Example 1. The results are shown in Table 3.

### Example 6, Comparative Example 5

The same procedure was followed as in Example 1 except for changing the amounts of the nitrile copolymer rubber "a" and acryl-based polymer "p" mixed so as to obtian cross-linked products. That is, in Example 6, the amount of the nitrile copolymer rubber "a" was made 55 parts and the amount of the acryl-based polymer "p" was made 45 parts, while in Comparative Example 5, the amount of the nitrile copolymer rubber "a" was made 30 parts and the amount of the acryl-based polymer "p" was made 70 parts.
The cross-linked products were evaluated and tested in the same way as in Example 1. The results are shown in Table 3.

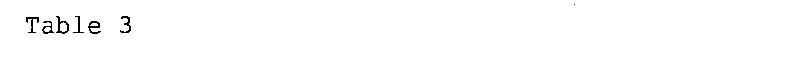

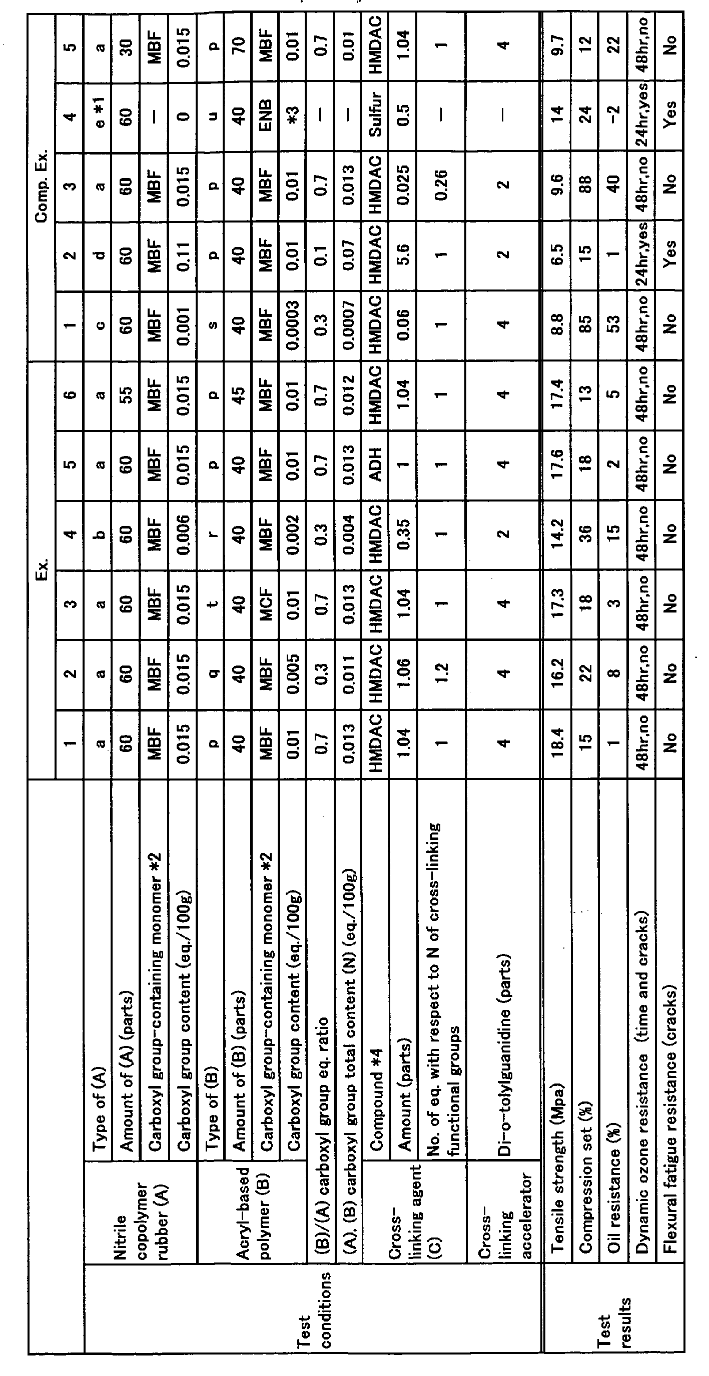

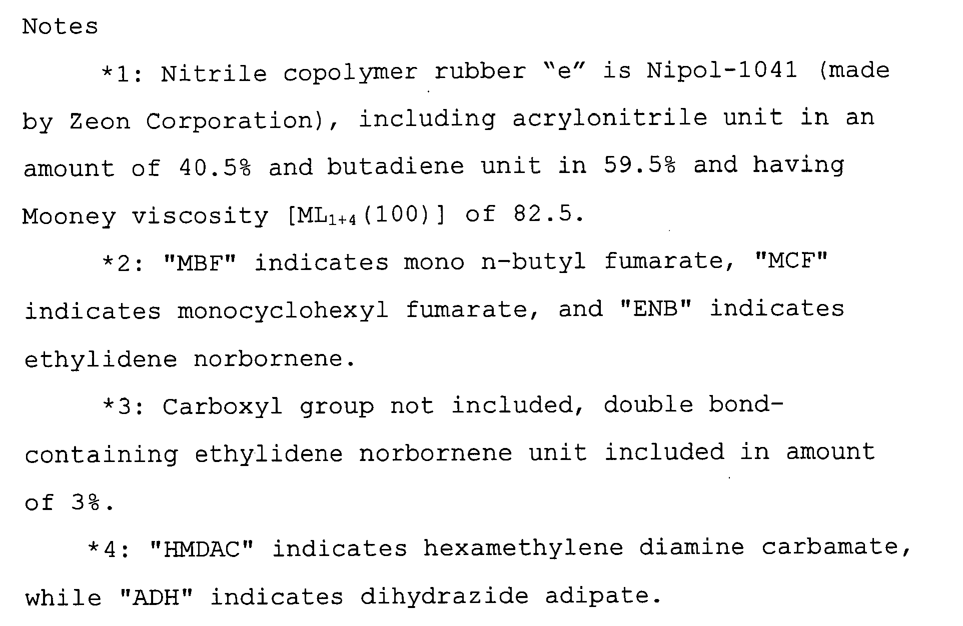

As shown in Table 3, by cross-linking the cross-linkable rubber composition of the present invention, a cross-linked product superior in not only mechanical property, such as tensile strength and low compression set, and oil resistance, but also dynamic ozone resistance and flexural fatigue resistance is obtained (Example 1 to 5).

On the other hand, if the amount of the carboxyl groups in the nitrile copolymer rubber (A) and acryl-based copolymer (B) is too small, the tensile strength, compression set, and other mechanical strength and the oil resistance become inferior in the cross-linked product (Comparative Example 1).
If the amount of the carboxyl groups included in the nitrile copolymer rubber (A) is too great, the tensile strength greatly falls and the dynamic ozone resistance and flexural fatigue resistance become inferior in the cross-linked product (Comparative Example 2).
If the amount of the cross-linking agent (C) blended is too small as well, the tensile strength, compression set, and other mechanical strength and the oil resistance become inferior in the cross-linked product (Comparative Example 3).
When cross-linking the nitrile copolymer rubber (A) and acryl-based copolymer (B) not by cross-linking the carboxyl groups, but by cross-linking the unsaturated bonds by sulfur, the obtained cross-linked product becomes the same in extent in tensile strength, compression set, and other mechanical strength and in oil resistance as the cross-linked product of the present invention, but becomes inferior in dynamic ozone resistance and flexural fatigue resistance in the cross-linked product (Comparative Example 4).
Further, if the acryl-based copolymer (B) is too large in content, the cross-linked product becomes particularly inferior in tensile strength and other mechanical strength (Comparative Example 5).

## Claims

1. A cross-linkable rubber composition comprised of
a mixture of a carboxyl group-containing nitrile copolymer rubber (A) with a carboxyl group content per 100 g of 2x10⁻³ to 1x10⁻¹ equivalents and a carboxyl group-containing acryl-based polymer (B) with a carboxyl group content per 100 g of 4x10⁻⁴ to 1x10⁻¹ equivalents in a weight ratio A:B=40:60 to 90:10 into which
a cross-linking agent (C) able to cross-link the carboxyl groups of both said nitrile copolymer rubber (A) and said acryl-based polymer (B) is blended,
the amount blended of said cross-linking agent (C), converted to equivalents of functional groups able to react with carboxyl groups in said cross-linking agent, being 0.3 to 3 times equivalents of the total content of the carboxyl groups of both said nitrile copolymer rubber (A) and said acryl-based polymer (B).

2. The cross-linkable rubber composition as set forth in claim 1, wherein a ratio of the carboxyl group content of said acryl-based polymer (B) with respect to the carboxyl group content of said nitrile copolymer rubber (A) is 0.2 to 1 times equivalents.

3. The cross-linkable rubber composition as set forth in claim 1 or 2, wherein a total content of the carboxyl groups of both said nitrile copolymer rubber (A) and said acryl-based polymer (B) is 7x10⁻⁴ to 1x10⁻¹ equivalents per 100 g.

4. The cross-linkable rubber composition as set forth in any of claims 1 to 3, wherein said nitrile copolymer rubber (A) includes an α,β-ethylenic unsaturated dicarboxylic acid monoester unit.

5. The cross-linkable rubber composition as set forth in any of claims 1 to 4, wherein said acryl-based polymer (B) includes an α,β-ethylenic unsaturated dicarboxylic acid monoester unit.

6. The cross-linkable rubber composition as set forth in any of claims 1 to 5, wherein said cross-linking agent (C) is a polyvalent amine compound.

7. A cross-linked product made by cross-linking the cross-linkable rubber composition as set forth in any of claims 1 to 6.
